# FASCICULE DE BREVET EUROPEEN

(11) **EP 1 599 987 B1**
(45) Date de publication et mention de la délivrance du brevet: **14.02.2007**
(21) Numéro de dépôt: 04714352.4
(22) Date de dépôt: 25.02.2004
(51) Int. Cl.: H04L 29/06, H04M 7/00

(54) **DISPOSITIF DE GESTION DE COMMUNICATIONS MULTIMEDIA VIA UN RESEAU ASYNCHRONE ET UN RESEAU DE TELEPHONE, A COMPENSATION DE DELAI DE TRANSMISSION**
VORRICHTUNG ZUR ÜBERTRAGUNGSVERZÖGERUNGSKOMPENSATION VON MULTIMEDIAKOMMUNIKATIONEN ÜBER EIN ASYNCHRONES NETZWERK UND EIN ÖFFENTLICHES TELEFONNETZ
TIME DELAY COMPENSATION DEVICE FOR THE MANAGEMENT OF MULTIMEDIA COMMUNICATIONS VIA AN ASYNCHRONOUS NETWORK AND A TELEPHONE NETWORK

(30) Priorité: 25.02.2003 FR 0302265
(43) Date de publication de la demande: 30.11.2005
(73) Titulaire: ALCATEL, 75008 Paris (FR)
(72) Inventeur: ABOU-CHAKRA, Rabih, F-95240 Cormeilles-en-Parisis (FR); MOULEHIAWY, Abdelkrim, F-75002 Paris (FR)
(74) Mandataire: Sciaux, Edmond
(86) Numéro de dépôt international: PCT/FR2004/000401
(87) Numéro de publication internationale: WO 2004/077717

(56) Documents cités:
- WO-A-99/44363
- US-A- 6 104 706
- US-A- 6 167 043

## Description

L'invention concerne le domaine des communications multimédia, notamment au sein de réseaux asynchrones.

On entend ici par « multimédia », aussi bien l'audio (voix et sons) que la vidéo (images fixes ou animées), ou la messagerie « instantanée », ou encore la présentation ou le partage de document(s), et analogues.

Dans les communications multimédia, la partie sonore (ou audio) revêt souvent une grande importance. Or, la transmission de flux de paquets de données audio (ou voix) au sein des réseaux asynchrones, comme par exemple les réseaux à protocole IP, induit une dégradation sensible de la qualité sonore initiale. Cela résulte principalement des gigues (ou fluctuations) des délais de transmission, des pertes de paquets, des échos de ligne et des échos acoustiques.

Pour remédier à cet inconvénient, il a été proposé d'établir manuellement, en parallèle d'une première communication multimédia établie via un réseau asynchrone, une seconde communication dédiée à l'audio via un réseau de téléphonie traditionnel commuté. Dans cette situation, la première communication est établie entre au moins deux terminaux de communication multimédia (ou vidéo) dont le haut-parleur et le microphone ont été préalablement mis hors de fonctionnement, et la seconde communication est établie entre au moins deux terminaux de communication audio.

On entend ici par « terminal de communication audio » (ou terminal audio) tout équipement de réseau communicant capable d'échanger des données audio, comme par exemple un téléphone. De même, on entend ici par « terminal de communication multimédia (ou vidéo) » (ou terminal vidéo) tout équipement de réseau communicant multimédia capable d'échanger des données vidéo, comme par exemple un ordinateur individuel.

Cette solution introduit une désynchronisation entre les données audio et les paquets de données vidéo provenant des terminaux audio et vidéo d'un même utilisateur. Plus précisément, les données audio arrivent généralement avant les paquets vidéo du fait que la transmission de données audio au sein d'un réseau de téléphonie traditionnel est quasi instantanée alors que les délais de transmission de paquets de données vidéo au sein des réseaux asynchrones sont plus longs et de type « non déterministe ». On entend ici par « non déterministe » le fait de présenter un caractère variable non maîtrisable dans le temps (ou aléatoire). Le document **WO 99/44363** décrit un procédé et une passerelle pour re-synchroniser des données audio et les paquets de données vidéo provenant des terminaux audio et vidéo d'un même utilisateur, le signal audio et éventuellement le signal vidéo étant transmis via un réseau asynchrone tel qu'un réseau local informatique. La passerelle comporte des moyens pour appliquer aux données audio un retard de transmission, variable et ajusté de manière à compenser au moins partiellement une différence de durée de transmission entre les données audio, et les données vidéo.

La passerelle doit connaître des valeurs de paramètres pour chaque terminal qui va utiliser ses services : un nom ou un identifiant de ce terminal ; le type de ce terminal; l'identifiant d'un autre terminal si le terminal considéré est associé à un autre terminal pour former un combiné multimédia ; un type de réseau de rattachement pour le terminal; un adresse du terminal dans un réseau informatique ; les normes supportées par le terminal; des informations de calibration. Le document **WO 99/44363** indique que ces valeurs de paramètres sont fournies par soit par un opérateur qui peut accéder à la passerelle, soit par l'usager d'un terminal, par un accès en ligne.

Il est fréquent qu'un usager commence par établir une communication multimédia (vidéo et audio) via un réseau asynchrone puis éprouve le besoin d'établir une communication audio via un réseau téléphonique traditionnel ; notamment s'il trouve que la qualité de la transmission audio est insuffisante sur le réseau asynchrone. Il doit alors se procurer rapidement le numéro de téléphone du terminal téléphonique à appeler, en contactant son correspondant par une messagerie électronique classique, ou instantanée ; ou en cherchant manuellement dans un annuaire. Puis l'usager doit composer ce numéro sur le clavier de son terminal téléphonique classique. L'établissement de la communication audio via un réseau différent de celui utilisé pour la communication multimédia initiale n'est donc pas très pratique pour l'usager, dans la mesure où cet usager doit faire une double manipulation : d'abord pour établir la communication multimédia, puis pour établir une communication téléphonique.

L'invention a donc pour but de remédier à l'inconvénient précité.

Elle propose à cet effet un dispositif de gestion de communications multimédia, via un réseau asynchrone et un réseau téléphonique traditionnel, entre, d'une part, un premier terminal de communication audio associé à un premier terminal de communication vidéo, et d'autre part, un second terminal de communication audio associé à un second terminal de communication vidéo ; ces terminaux de communication vidéo étant aptes à demander l'établissement, à travers le réseau asynchrone, d'une communication multimédia capable de transmettre au moins un signal vidéo ; caractérisé en ce qu'il comprend :
- des moyens de liaison propres à établir sur ordre une liaison téléphonique entre lesdits premier et second terminaux de communication audio via ledit réseau téléphonique traditionnel ,
- et des moyens propres à fournir automatiquement aux moyens de liaison les identifiants du premier et du second terminal de communication audio, lorsqu'une liaison multimédia est à établir entre lesdits premier et second terminaux de communication vidéo via le réseau asynchrone.

Le dispositif ainsi caractérisé permet à un usager d'établir facilement une communication téléphonique à travers un réseau téléphonique traditionnel, parallèlement à une communication multimédia utilisée seulement pour transmettre de la vidéo, parce que les moyens propres à fournir automatiquement aux moyens de liaison les identifiants du premier et du second terminal de communication audio, déchargent l'usager de la charge de chercher l'identifiant du terminal audio à appeler, et d'établir une communication à partir de cet identifiant.

Selon un premier mode de réalisation, les moyens propres à fournir automatiquement aux moyens de liaison les identifiants du premier et du second terminal de communication audio comportent, dans chaque terminal de communication vidéo :
- un moyen pour envoyer à l'autre terminal de communication vidéo, un identifiant du terminal téléphonique associé au terminal vidéo considéré ;
- un moyen pour recevoir de l'autre terminal de communication vidéo un identifiant du terminal téléphonique associé à cet autre terminal vidéo ;
- et un moyen pour commander les moyens de liaison afin d'établir une liaison téléphonique.

Selon un premier mode de réalisation, les moyens propres à fournir automatiquement aux moyens de liaison les identifiants du premier et du second terminal de communication audio comportent, dans un noeud du réseau téléphonique traditionnel, un moyen pour :
- chercher les identifiants du premier et du second terminal de communication audio dans un annuaire centralisé ;
- et commander les moyens de liaison afin d'établir une liaison téléphonique entre les deux terminaux ainsi identifiés.

Plusieurs modes de réalisation peuvent être envisagés pour les moyens de gestion. Ils peuvent en effet être agencés de manière à appliquer aux données audio un retard de transmission de durée prédéterminée (éventuellement constante), ou de durée variable.

Dans le cas d'une durée variable, plusieurs cas peuvent être envisagés. Par exemple, les moyens de gestion peuvent être agencés de manière à déterminer la durée en fonction de données auxiliaires qui lui sont délivrées soit par des moyens d'interface de gestion du dispositif, soit par les premier ou second terminaux vidéo après que les moyens de liaison aient établi des liaisons, dites de signalisation, avec ces terminaux vidéo, via le réseau asynchrone.

Dans cette dernière situation, au moins deux modes de réalisation peuvent être envisagés. Ils reposent tous les deux sur l'utilisation du microphone de chaque terminal vidéo pour capter les sons (données audio) délivrés par l'utilisateur à son terminal audio ou délivrées par le haut-parleur du terminal audio.

Dans le premier mode de réalisation, le dispositif comprend des modules auxiliaires, couplés chacun à un microphone au sein d'un terminal vidéo, et chargés de déterminer la différence de durée de transmission des données audio sur la liaison multimédia et sur la liaison téléphonique, et de générer des données auxiliaires représentatives de cette différence.

A cet effet, chaque module auxiliaire peut par exemple comprendre :
- des moyens de traitement chargés, lorsqu'ils reçoivent des données audio (sons captés par le microphone du terminal vidéo), d'en extraire une portion, puis de constituer un paquet primaire avec les données audio de la portion, puis de synchroniser le paquet primaire avec le flux vidéo échangé, et enfin de transmettre le paquet primaire synchronisé au module auxiliaire implanté dans le terminal vidéo avec lequel leur propre terminal vidéo a établi une liaison multimédia, et
- des moyens de calcul chargés, lorsqu'ils reçoivent un paquet primaire, de dater le paquet primaire, puis de comparer la portion de données audio contenues dans ce paquet primaire daté aux données audio de téléphonie datées, précédemment reçues via le terminal audio et le microphone, puis en cas d'identité entre la portion et certaines des données audio de téléphonie, de déterminer la différence de durée de transmission des données audio sur la liaison multimédia et sur la liaison téléphonique, puis de générer des données auxiliaires représentatives de cette différence, et enfin de transmettre les données auxiliaires au module de liaison via une liaison de signalisation.

Dans ce cas, d'une part, les moyens de traitement peuvent être agencés, lorsqu'ils reçoivent des données audio et avant de transmettre le paquet primaire, de manière à constituer un paquet secondaire de déclenchement et à le synchroniser avec le flux vidéo échangé, puis à transmettre ce paquet secondaire au module de calcul implanté dans le terminal vidéo avec lequel leur propre terminal vidéo a établi une liaison multimédia, et d'autre part, les moyens de calcul sont agencés, lorsqu'ils reçoivent un paquet secondaire, de manière à ordonner la mémorisation et la datation des données audio de téléphonie provenant du terminal audio via le microphone.

Dans le second mode de réalisation, d'une part, les moyens de gestion sont agencés, après avoir établi la liaison téléphonique, pour transmettre simultanément aux premier et second terminaux vidéo, via la liaison téléphonique et leurs microphones respectifs, un message définissant un instant initial, et d'autre part, le dispositif comprend des modules auxiliaires, couplés chacun à un microphone au sein d'un terminal vidéo, et chargés de déterminer la durée de transmission des données vidéo sur la liaison multimédia, et de générer des données auxiliaires représentatives de cette durée.

A cet effet, chaque module auxiliaire peut par exemple comprendre :
- des moyens de datation agencés, d'une part, lorsqu'ils reçoivent un message, pour déclencher un compteur temporel, et pour adjoindre un marquage temporel d'émission, représentatif de la durée écoulée depuis le déclenchement du compteur temporel, à chaque flux de paquets vidéo devant être transmis au terminal vidéo avec lequel leur propre terminal vidéo a établi une liaison multimédia, et d'autre part, lorsqu'ils reçoivent un flux de paquets vidéo marqué, pour adjoindre à ce flux un marquage temporel de réception, représentatif de la durée écoulée depuis le déclenchement du compteur temporel, et
- des moyens de calcul, agencés pour déterminer à partir des marquages temporels d'émission et de réception la durée de transmission des données vidéo sur la liaison multimédia établie via le réseau asynchrone entre les premier et second terminaux vidéo, puis pour générer des données auxiliaires représentatives de cette durée de transmission, et transmettre les données auxiliaires au module de liaison via une liaison de signalisation.

Dans ce cas, d'une part, les moyens de gestion sont préférentiellement agencés de manière à déterminer une durée réelle de transmission des données vidéo sur la liaison multimédia par addition de la durée de transmission reçue et du résultat de la soustraction entre une première durée de transmission du message entre les moyens de gestion et le module auxiliaire implanté dans le second terminal vidéo et une seconde durée de transmission du message entre les moyens de gestion et le module auxiliaire implanté dans le premier terminal vidéo. Ces première et seconde durées peuvent être, par exemple, obtenues par la mise en oeuvre d'une technique d'écho acoustique, de préférence par les moyens de gestion.

D'autres caractéristiques et avantages de l'invention apparaîtront à l'examen de la description détaillée ci-après, et des dessins annexés, sur lesquels :
- la **figure 1** illustre de façon schématique un premier exemple de réalisation d'un dispositif selon l'invention, implanté dans une installation de communications, et
- la **figure 2** illustre de façon schématique un second exemple de réalisation d'un dispositif selon l'invention, implanté dans une installation de communications.

Les dessins annexés pourront non seulement servir à compléter l'invention, mais aussi contribuer à sa définition, le cas échéant.

L'invention concerne les communications multimédia au sein de réseaux asynchrones et de réseaux de téléphonie traditionnels entre, d'une part, un premier terminal de communication audio et un premier terminal de communication vidéo, indépendants, et d'autre part, un second terminal de communication audio et un second terminal de communication vidéo, indépendants.

Dans ce qui suit, on considère à titre d'exemple que le réseau asynchrone est un réseau à protocole IP et que le réseau de téléphonie est du type dit « à multiplexage temporel » (ou TDM pour « Time division Multiplexing »). Mais, l'invention n'est ni limitée aux réseaux asynchrones à protocole IP, ni aux réseaux de téléphonie TDM. Elle concerne tous les réseaux asynchrones dits « à commutation de paquets », dans lesquels la transmission de flux de paquets de données audio ou vidéo est de type non déterministe (ou aléatoire), ainsi que tous les réseaux de téléphonie commutés traditionnels dans lesquels les délais de transmission sont courts et prédictibles.

Par ailleurs, dans ce qui suit, on considère à titre d'exemple que chaque terminal de communication audio est un téléphone fixe équipé d'un haut-parleur et d'un microphone et raccordé par liaison filaire au réseau de téléphonie TDM. En outre, dans ce qui suit, on considère à titre d'exemple que chaque terminal de communication vidéo est un ordinateur individuel multimédia équipé d'un haut-parleur et d'un microphone, capable d'échanger des données vidéo via le réseau asynchrone IP, et éventuellement couplé à une caméra vidéo. Mais l'invention n'est pas limitée aux ordinateurs individuels (fixes ou portables). Elle concerne tout équipement communicant capable d'échanger des données multimédia (notamment vidéo) via le réseau asynchrone IP.

En conséquence, dans ce qui suit les expressions « téléphone » et « ordinateur » désignent respectivement un terminal de communication audio (ou terminal audio) et un terminal IP de communication vidéo (ou terminal IP vidéo).

L'invention propose un dispositif de gestion destiné à permettre à des utilisateurs d'échanger des données audio (ou voix) et des données vidéo (ou image) de façon synchronisée respectivement sur leurs téléphone et ordinateur personnels (lesquels sont indépendants).

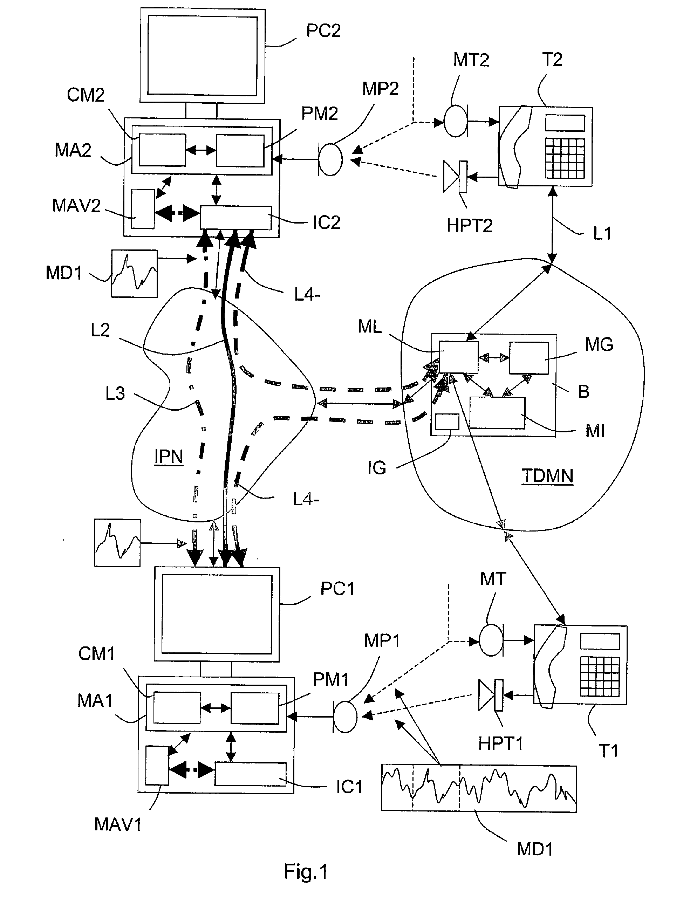

On se réfère à la **figure 1** pour décrire un premier exemple de réalisation de dispositif de gestion selon l'invention.

Dans cet exemple, un premier utilisateur dispose d'un premier couple d'équipements comportant un premier téléphone T1 et un premier ordinateur PC1 contenant des données vidéo (ou raccordé à une caméra vidéo délivrant des données vidéo, comme par exemple une « web camera »). De même, un second utilisateur dispose d'un second couple d'équipements comportant un second téléphone T2 et un second ordinateur PC2 contenant des données vidéo (ou raccordé à une caméra vidéo délivrant des données vidéo, comme par exemple une « web camera »).

Chaque ordinateur PCi (ici i = 1 et 2) est équipé d'un haut-parleur (non représenté), d'un microphone MPi et d'un module applicatif vidéo MAVi couplé à une interface de communication IP, ICi, de manière à l'alimenter en données vidéo stockées dans une mémoire ou provenant d'une caméra vidéo, l'interface ICi étant raccordée à un réseau IP, IPN. Par ailleurs, chaque téléphone Ti est équipé d'un haut-parleur HPTi et d'un microphone MTi, et est raccordé à un réseau de téléphonie traditionnel TDMN, à multiplexage temporel synchrone.

Ce réseau de téléphonie traditionnel TDMN comporte un boîtier de gestion B, par exemple implanté dans un centre de commutation de réseau (ou PBX pour « Private Branch eXchange »), dans lequel peut se trouver implantée une partie du dispositif de gestion selon l'invention. Plus précisément, le boîtier de gestion B comprend au moins un module de liaison ML et un module de gestion MG. Le module de liaison ML est chargé d'établir une liaison téléphonique, entre un téléphone T1 et un téléphone T2 via le réseau de téléphonie TDMN, sous la commande du module de gestion MG.

Le module de gestion MG reçoit un ordre d'établissement d'une communication audio L1 lorsqu'une liaison multimédia L2-L3 est à établir entre deux terminaux de communication vidéo PC1, PC2 via le réseau asynchrone IPN. Le module MG ordonne alors au module de liaison ML d'établir une liaison téléphonique L1 entre les téléphones T1 et T2, via le réseau traditionnel TDMN ; et d'autre part, il détermine un retard de transmission à d'appliquer à des données audio échangées via la liaison téléphonique L1, afin de compenser au moins partiellement la différence de durée de transmission entre les données audio que doivent s'échanger les téléphones T1 et T2 via la liaison téléphonique L1, et les données vidéo, que doivent s'échanger les ordinateurs PC1 et PC2 via une liaison multimédia, L2-L3, établie au sein du réseau IPN. Cette liaison multimédia est constituée en fait de deux liaisons : une liaison L2 pour transmettre un signal vidéo, et une liaison L3 prévue pour transmettre un signal audio. Cette liaison L3 a par hypothèse une qualité qui n'est pas satisfaisante pour les utilisateurs. Ceux-ci souhaitent utiliser plutôt une liaison audio L1 via le réseau traditionnel TDMN.

Bien que cela ne soit pas illustré, le boîtier de gestion B peut également comporter un module d'annulation d'écho, du type de ceux utilisés habituellement lorsqu'un retard audio supérieur à une valeur seuil choisie doit être introduit. La valeur seuil est généralement choisie en fonction d'une recommandation. Elle est par exemple égale à 10 ou 20 ms (milliseconde).

Dans l'exemple illustré, le boîtier de gestion B comporte également un module d'insertion MI, alimenté en données audio à retarder (issues d'un téléphone Ti) par le module de liaison ML et chargé d'appliquer à ces données audio le retard de transmission déterminé par le module de gestion MG. Une fois ce retard appliqué, les données audio retournent dans le module de liaison ML qui les transmet via la liaison L1 au téléphone destinataire Tj. Le module d'insertion MI peut faire partie du module de gestion MG, mais il peut également être implanté ailleurs que dans le boîtier de gestion B.

Bien entendu, pour que la liaison téléphonique L1 puisse être établie en association avec la liaison vidéo L2 de la liaison multimédia L2-L3, il faut que les deux ordinateurs PC1 et PC2 aient été configurés à cet effet, et plus précisément leur module applicatif de communication multimédia MAVi. La configuration consiste notamment à fournir au module applicatif de communication multimédia MAVi de l'ordinateur PCi l'identifiant téléphonique complet (y compris les codes régionaux et nationaux) du téléphone Ti qui lui est associé.

Ainsi, lorsqu'un utilisateur Ui, possédant un ordinateur PCi et un téléphone Ti, souhaite établir une communication multimédia avec un utilisateur Uj, possédant un ordinateur PCj et un téléphone Tj, il active le module applicatif de communication multimédia MAVi de son ordinateur PCi en lui fournissant l'identifiant de communication IP de l'ordinateur PCj. Il y a deux variantes de fonctionnement du module applicatif MAVi lorsqu'un usager Ui demande ainsi l'établissement d'une communication multimédia :
- Soit le module MAVi est programmé pour établir systématiquement deux communications, lorsqu'un usager Ui demande l'établissement d'une communication multimédia : une communication multimédia L2-L3 pouvant a priori supporter un signal vidéo et un signal audio, mais qui est utilisée seulement pour transmettre un signal vidéo vers le terminal multimédia constitué de l'ordinateur PCj, via le réseau asynchrone IPN ; et une communication téléphonique L1 vers le terminal téléphonique Tj associé à l'ordinateur PCj de l'usager correspondant Uj, via le réseau traditionnel TDMN.
- Soit le module MAVi est programmé pour établir seulement la communication multimédia L2-L3, et pour proposer à l'usager Ui, comme une option, d'établir en plus une communication téléphonique L1 (de meilleure qualité) vers le terminal téléphonique Tj associé à l'ordinateur PCj de l'usager correspondant Uj , via le réseau traditionnel TDMN. Si l'usager Ui répond positivement, le module applicatif MAVi va lire, dans une mémoire de l'ordinateur Pci, l'identifiant du terminal téléphonique Tj associé au terminal multimédia constitué de l'ordinateur PCj de l'usager correspondant Uj, cet identifiant ayant été mémorisé au préalable dans cette mémoire.
Les deux modules applicatifs de communication multimédia MAVi et MAVj de l'ordinateur PCi et PCj négocient une liaison multimédia L2-L3, et ils établissent cette liaison multimédia L2-L3, via le réseau IPN.

Selon un premier mode de réalisation du boîtier de gestion B et des modules applicatifs vidéo MAVi , MAVj, ces derniers se communiquent les identifiants téléphoniques des téléphones Ti et Tj auxquels ils sont respectivement associés. Les deux usagers n'ont donc pas à intervenir pour se procurer le numéro de téléphone de leur correspondant respectif. Une fois la liaison multimédia L2-L3 établie, l'ordinateur PCi adresse au boîtier de gestion B (dont il connaît l'identifiant de communication IP) une requête d'établissement de liaison téléphonique, contenant notamment les identifiants téléphoniques des deux téléphones Ti et Tj. Le module de gestion MG traite la requête et ordonne alors au module de liaison ML d'établir la liaison téléphonique L1. La communication multimédia, via les terminaux vidéo PCi et PCj (pour ce qui concerne les images) et les terminaux audio Ti et Tj (pour ce qui concerne la voix), peut alors commencer. L'établissement de cette liaison téléphonique L1 est rendu possible du fait que les centre de commutation disposent d'une capacité a effectuer des routages spéciaux vers un boîtier de gestion B, grâce à l'utilisation de préfixes d'appel dédiés et d'un protocole tel que CSTA.

Le lancement de la procédure d'établissement de la communication téléphonique L1 en plus de la communication multimédia L2-L3 peut donc être soit systématique, par exemple par une configuration antérieure du module applicatif de communication multimédia MAVi; soit effectuée à la requête de l'utilisateur Ui, par exemple en sélectionnant une option proposée sur son écran d'ordinateur par son module applicatif de communication multimédia MAVi. Mais, dans tous les cas, cette procédure est simplifiée puisque l'utilisateur n'a pas besoin de se procurer l'identifiant du poste téléphonique de son correspondant.

Selon un second mode de réalisation (non représenté) du boîtier de gestion B et des modules applicatifs vidéo MAVi , MAVj, plus particulièrement adapté aux réseaux d'entreprise, les identifiants téléphoniques tes terminaux Ti et Tj sont stockés dans un serveur d'annuaire, et une application est exécutée sur un serveur d'application, ces serveurs étant situés dans des noeuds du réseau de l'entreprise. Cette application établit, à la demande d'un terminal de communication vidéo, PC1 par exemple, une communication multimédia L2-L3, via le réseau asynchrone IPN, et établit éventuellement en plus une communication téléphonique L1 via le réseau traditionnel TDMN, de manière entièrement automatique. Il y a deux variantes de fonctionnement de cette application :
- Soit cette application est programmée pour établir systématiquement deux communications, lorsqu'un usager Ui demande l'établissement d'une communication multimédia: une communication multimédia L2-L3 pouvant a priori supporter un signal vidéo et un signal audio, mais qui est utilisée seulement pour transmettre un signal vidéo vers le terminal multimédia constitué de l'ordinateur PCj, via le réseau asynchrone IPN ; et une communication téléphonique L1 vers le terminal téléphonique Tj associé à l'ordinateur PCj de l'usager correspondant Uj, via le réseau traditionnel TDMN.
- Soit elle est programmée pour établir seulement une communication multimédia L2-L3 pouvant a priori transmettre un signal vidéo et un signal audio via le réseau asynchrone IPN, et pour proposer à l'usager, comme une option, d'établir en plus une communication téléphonique L1 (de meilleure qualité) vers le terminal téléphonique associé au terminal multimédia du correspondant, via le réseau traditionnel TDMN.
Dans les deux cas, la procédure d'établissement de la communication téléphonique est automatisée, l'usager n'a pas besoin de se procurer le numéro du terminal téléphonique à appeler. L'application est programmée pour aller chercher automatiquement l'identifiant du terminal téléphonique associé au terminal multimédia du correspondant, dans le serveur d'annuaire associé au centre de commutation.

Le retard de transmission appliqué aux données audio peut être de durée prédéterminée (éventuellement constante). Mais, il est préférable qu'il soit de durée variable afin d'optimiser la synchronisation des données audio et des données vidéo.

Lorsque le retard est de durée variable, au moins trois cas peuvent être envisagés. Le module de gestion MG peut, par exemple, déterminer la durée du retard en fonction de données auxiliaires qui lui sont délivrées par un opérateur via une interface de gestion IG du dispositif, ou bien par l'utilisateur Ui de l'un des ordinateurs PCi via une liaison, dite de signalisation, L4-i, par exemple, ou encore par les ordinateurs PC1, PC2 après que le module de liaison ML ait établi avec ces derniers des liaisons L4-i, dites de signalisation, via le réseau IPN.

L'exemple de dispositif de gestion illustré sur la **figure 1** est chargé de déterminer et d'appliquer un retard variable à partir de données auxiliaires fournies par l'ordinateur PC1 ou l'ordinateur PC2. A cet effet, le dispositif de gestion comporte des modules auxiliaires (ou dispositifs de calcul) MAi implantés dans chaque ordinateur PCi et couplés à l'interface de communication IP ICi. Chaque module auxiliaire MAi est couplé au microphone MPi de l'ordinateur PCi dans lequel il est implanté, et chargé, dans cet exemple, de déterminer (ou estimer) la différence de durée de transmission des données audio sur la liaison multimédia vidéo L2 et sur la liaison téléphonique L1, et de générer des données auxiliaires représentatives de cette différence.

Comme cela est illustré sur la **figure 1**, chaque module auxiliaire MAi (par exemple MA1) comprend un module de traitement PMi (par exemple PM1) chargé, lorsqu'il reçoit du microphone Mi (M1 dans cet exemple) des données audio représentatives des paroles (ou signaux sonores) SS1 émises par l'utilisateur U1 à destination du micro MT1 de son téléphone T1, d'en extraire une portion PSS1, puis de constituer un paquet primaire avec les données audio de la portion PSS1, puis de synchroniser le paquet primaire avec le flux vidéo échangé sur la liaison multimédia vidéo L2, et enfin de transmettre le paquet primaire synchronisé au module auxiliaire MA2 implanté dans l'ordinateur PC2. Ce paquet primaire contenant des données audio, il emprunte donc la partie audio L3 de la liaison multimédia établie entre les deux ordinateurs PC1 et PC2 au sein du réseau IP IPN.

Par ailleurs, chaque module auxiliaire MAi (par exemple MA2) comprend un module de calcul CMi (par exemple CM2) chargé de dater chaque paquet primaire qu'il reçoit, puis de comparer la portion PSS1 de données audio contenues dans ce paquet primaire daté aux données audio de téléphonie datées SS1, précédemment reçues par le téléphone T2 via la liaison téléphonique L1, diffusées sur son haut-parleur HPT2 et captées par le microphone MP2, puis en cas d'identité entre la portion reçue PSS1 et certaines des données audio de téléphonie captées SS1, de déterminer la différence de durée de transmission des données audio sur la liaison multimédia audio L3 et sur la liaison téléphonique L1, puis de générer des données auxiliaires représentatives de cette différence, et enfin de transmettre les données auxiliaires au module de liaison ML du boîtier de gestion B, via une liaison de signalisation L4-2 qu'il a préalablement établie avec l'ordinateur PC2.

En fait, dans ce mode de réalisation, la requête d'établissement de liaison reçue par le module de gestion MG comporte également les identifiants de communication IP des deux ordinateurs PC1 et PC2. Par conséquent, une fois que le module de liaison ML a établi la liaison téléphonique L1, le module de gestion MG lui ordonne d'établir avec chaque ordinateur PCi une liaison de signalisation L4-i via le réseau IP IPN, afin de permettre auxdits ordinateurs PCi de lui transmettre leurs données auxiliaires.

Dans ce mode de réalisation, c'est donc le module auxiliaire MAj de l'ordinateur récepteur PCj qui est chargé de déterminer la différence de durée de transmission des données audio PSSi issues de l'ordinateur PCi sur la liaison multimédia audio L3 et des données audio SSi issues du téléphone Ti sur la liaison téléphonique L1, les paquets audio ayant été synchronisés aux paquets vidéo correspondants par n'importe quelle méthode de synchronisation connue de l'homme de l'art.

A réception de la portion PSS1, le module de calcul CMj compare ses données audio à celles qu'il vient de mémoriser et de dater. Puis, en cas d'identité il calcule la différence en effectuant la soustraction entre l'heure d'arrivée des données audio de la portion PSSi issues de l'ordinateur PCi et l'heure d'arrivée des données audio SSi issues du téléphone Ti. On considère en effet ici que la durée écoulée entre l'instant d'émission des sons SSi par l'utilisateur Ui et l'instant de traitement desdits sons par le module de traitement PMi est sensiblement égale à la durée écoulée entre l'instant d'émission des sons SSi par le haut-parleur HPTj et l'instant de datation desdits sons par le module de calcul CMj, précédant leur mémorisation dans une mémoire du module auxiliaire MAj (non représentée).

Le mécanisme de mémorisation peut être mis en oeuvre de deux façons. Une première façon consiste à configurer les modules de calcul CMi de sorte qu'ils sauvegardent en permanence, pendant une durée choisie (par exemple égale à quelques secondes), toutes les données audio SSj (échantillonnées) provenant du téléphone Tj émetteur.

Une seconde façon consiste à prévoir un déclenchement de la mémorisation par envoi d'un signal déclencheur par l'ordinateur émetteur PCj vers l'ordinateur récepteur PCi. Pour ce faire, le module de traitement PMj est agencé de manière à constituer un paquet secondaire (formant un signal déclencheur) chaque fois qu'il commence à recevoir des données audio SSj captées par le microphone MPj, et avant de transmettre le paquet primaire. Puis, le module de traitement PMj synchronise le paquet secondaire avec le flux vidéo échangé, le transmet via la liaison multimédia audio L3 au module auxiliaire MAj implanté dans l'ordinateur récepteur PCi.

Le module de calcul CMi est alors agencé de manière à ordonner la mémorisation et la datation des données audio de téléphonie SSj provenant du téléphone émetteur Tj, chaque fois qu'il reçoit un paquet secondaire en provenance de l'ordinateur émetteur PCj. Cette mémorisation est préférentiellement d'une durée choisie (par exemple égale à quelques secondes).

Une fois en possession des données auxiliaires, le module de gestion MG peut en déduire la durée du retard à appliquer aux données audio afin de compenser (au moins partiellement) la désynchronisation entre ces données audio, transmises par le réseau téléphonique TDMN, et les paquets de données vidéo, transmis par le réseau IP IPN. Il adresse alors des instructions au module d'insertion MI afin qu'il retarde les données audio de la durée choisie, avant qu'elles ne soient réinjectées dans le réseau téléphonique TDMN, à destination du téléphone récepteur.

Il est important de noter que le retard peut être soit déterminé pour toute la durée de la communication multimédia, soit déterminé périodiquement, par exemple toutes les secondes.

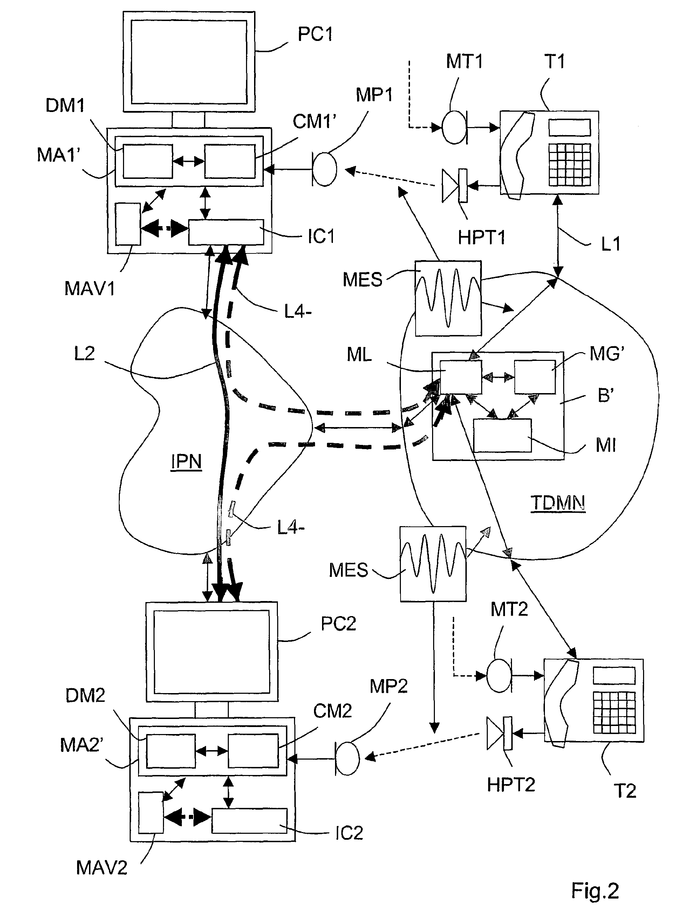

On se réfère maintenant à la **figure 2** pour décrire un second exemple de réalisation de dispositif de gestion selon l'invention. Ce mode de réalisation présente de nombreuses similitudes avec celui décrit précédemment en référence à la figure 1. Il peut notamment être utilisé dans le même type d'installation de communications.

Ce qui différencie ce mode de réalisation du précédent, c'est, d'une part, l'agencement du module de gestion MG' et des modules auxiliaires (ou dispositifs de calcul) MAi', et d'autre part, le mode de détermination de la durée du retard à appliquer aux données audio.

Dans ce mode de réalisation, le module de gestion MG' est agencé, une fois que la liaison téléphonique L1 a été établie, pour transmettre simultanément aux premier PC1 et second PC2 ordinateurs, via la liaison téléphonique L1, les haut-parleurs HPT1 et HPT2 des téléphones T1 et T2 et leurs microphones respectifs MP1 et MP2, un message MES définissant un instant initial. Par ailleurs, chaque module auxiliaire MAi' est toujours couplé au microphone MPi de l'ordinateur PCi dans lequel il est implanté, mais il est désormais chargé de déterminer la durée de transmission DT des données vidéo sur la liaison multimédia vidéo L2, et de générer des données auxiliaires représentatives de cette durée. Il est important de signaler que le message MES peut être optionnellement envoyé périodiquement, afin de permettre une redéfinition (périodique) de l'instant initial.

Comme cela est illustré sur la **figure 2**, chaque module auxiliaire MAi' comprend un module de datation DMi chargé, lorsqu'il reçoit du microphone MPi un message MES provenant du boîtier de gestion B' et diffusé par le haut-parleur HPTi, de déclencher un compteur temporel (non représenté), et de dater chaque flux de paquets vidéo devant être transmis à l'ordinateur destinataire PCj via la liaison multimédia vidéo L2. Cette datation consiste à adjoindre au flux vidéo un marquage temporel, dit d'émission, représentatif de la durée écoulée depuis le déclenchement du compteur temporel.

Le module de datation DMi est également agencé, lorsqu'il reçoit un flux de paquets vidéo marqué (ou daté) provenant d'un ordinateur PCj via la liaison multimédia vidéo L2, pour adjoindre à ce flux un autre marquage temporel, dit de réception, représentatif de la durée écoulée depuis le déclenchement de son propre compteur temporel.

Chaque module auxiliaire MAi' comprend également un module de calcul CMi' chargé de déterminer, à partir des marquages temporels d'émission et de réception des flux vidéo reçus de l'ordinateur émetteur PCj, la durée de transmission DT des données vidéo sur la liaison multimédia vidéo L2, puis de générer des données auxiliaires représentatives de cette durée de transmission DT, et de les transmettre au module de gestion MG' du boîtier de gestion B' via la liaison de signalisation L4-i préalablement établie par le module de liaison ML, comme expliqué précédemment.

Cette détermination s'effectue à l'aide d'une simple soustraction entre le marquage temporel de réception et le marquage temporel d'émission adjoints à chaque flux vidéo.

Cette durée de transmission DT n'est pas égale à la véritable durée de transmission DTR, puisqu'elle ne tient pas compte des durées de transmission différentes du message MES entre le module de gestion MG' et le premier ordinateur PC1, d'une part, et le module de gestion MG' et le second ordinateur PC2, d'autre part. Or, en raison de cette différence, les comptages temporels ne sont généralement pas déclenchés de façon simultanée par les modules de datation DM1 et DM2.

L'exemple suivant va permettre d'illustrer cette différence. On suppose, d'une part, que le module de datation DM1 du premier ordinateur PC1 a reçu le message MES à l'instant To + A = 14 h 50 mn 24 s 300 ms, où A représente la durée de transmission du message MES entre le module de gestion MG' et le premier ordinateur PC1, et d'autre part, que le module de datation DM2 du second ordinateur PC2 a reçu le message MES à l'instant To + B = 16 h 51 mn 25 s 250 ms, où B représente la durée de transmission du message MES entre le module de gestion MG' et le second ordinateur PC2 (ici, il existe un décalage horaire de deux heures entre les deux ordinateurs).

To + A constitue donc l'instant de démarrage du comptage temporel effectué par le module de datation DM1, et To + B constitue l'instant de démarrage du comptage temporel effectué par le module de datation DM2.

Un paquet vidéo émis par le premier ordinateur PC1 à 14 h 55 mn 49 s 700 ms va donc comporter un marquage temporel d'émission dont la valeur est 00 h 05 mn 25 s 400 ms. Ce paquet vidéo marqué est par exemple reçu par le module de datation DM2 du second ordinateur PC2 à16 h 56 mn 50 s 950 ms, si bien que ledit module de datation DM2 peut lui adjoindre un marquage temporel de réception dont la valeur est 00 h 05 mn 25 s 700 ms.

Pour déterminer la durée de transmission DT sur la liaison multimédia vidéo L2, le module de calcul CM2' effectue donc l'opération suivante :

DT = 00 h 05 mn 25 s 700 ms - 00 h 05 mn 25 s 400 ms = 300 ms.

La durée réelle de transmission DTR est préférentiellement déterminée par le module de gestion MG' à partir de la durée de transmission DT transmise sous forme de données auxiliaires par le module auxiliaire MAi' de l'ordinateur récepteur PCi, via la liaison de signalisation L4-i.

Plus précisément, pour déterminer la durée de transmission réelle DTR des données vidéo sur la liaison multimédia vidéo L2, le module de gestion MG' additionne à la durée de transmission reçue le résultat de la soustraction entre la durée de transmission du message (B) entre le boîtier de gestion B' et le module auxiliaire MA2' implanté dans le second ordinateur PC2 et la durée de transmission du message (A) entre le boîtier de gestion B' et le module auxiliaire MA1' implanté dans le premier ordinateur PC1. En d'autres termes, on a la relation DTR = DT + B - A.

Ces durées A et B sont constantes et peuvent être, par exemple, obtenues par la mise en oeuvre d'une technique d'écho acoustique par aller retour d'un signal sonore entre le boîtier de gestion B' et chaque téléphone Ti, à l'initiative du module de gestion MG'.

Ces durées A et B étant en général petites devant les durées de transmission des paquets vidéo sur la liaison multimédia vidéo L2, typiquement 25 ms comparé à 300 ms, il est possible d'envisager un mode de fonctionnement simplifié dans lequel DT est égal à DTR. Dans ce cas, le module de gestion MG' n'a pas besoin d'effectuer de calcul supplémentaire pour déterminer le retard à appliquer aux données audio.

Les modules de gestion, de liaison, d'insertion, de traitement, de calcul et de datation des dispositif de gestion et dispositif de calcul selon l'invention peuvent être réalisés sous la forme de circuits électroniques, de modules logiciels (ou informatiques), ou d'une combinaison de circuits et de logiciels.

Grâce à l'invention, d'une part, la transmission des données audio d'une communication multimédia permet de supprimer les fluctuations des délais de transmission, les pertes de paquets audio, les échos de ligne et les échos acoustiques, et d'autre part, l'insertion d'un retard de transmission permet de compenser partiellement ou totalement la désynchronisation entre les données audio et les paquets de données vidéo.

L'invention ne se limite pas aux modes de réalisation de dispositif de gestion, dispositif de calcul, terminal de communication vidéo et boîtier de gestion décrits ci-avant, seulement à titre d'exemple, mais elle englobe toutes les variantes que pourra envisager l'homme de l'art dans le cadre des revendications ci-après.

Ainsi, on a décrit des exemples de réalisation adaptés aux communications via un réseau asynchrone à protocole IP et un réseau de téléphonie de type TDM. Mais, l'invention n'est pas limitée à ces seuls réseaux. Elle concerne d'une manière générale, d'une part, tous les réseaux dits « à commutation de paquet », dans lesquels la transmission de flux de paquets de données audio ou vidéo est de type non déterministe, et d'autre part tous les réseaux de téléphonie traditionnels, c'est à dire commutés avec des délais de transmission courts et de type déterministe.

## Revendications

1. Dispositif de gestion de communications multimédia, via un réseau asynchrone (IPN) et un réseau téléphonique traditionnel (TDMN), entre, d'une part, un premier terminal de communication audio (T1) associé à un premier terminal de communication vidéo (PC1), et d'autre part, un second terminal de communication audio (T2) associé à un second terminal de communication vidéo (PC2) ; ces terminaux de communication vidéo étant aptes à demander l'établissement, à travers le réseau asynchrone, d'une communication multimédia (L2-L3) capable de transmettre au moins un signal vidéo ; **caractérisé en ce qu'**il comprend :
- des moyens de liaison (ML) propres à établir sur ordre une liaison téléphonique (L1) entre lesdits premier (T1) et second (T2) terminaux de communication audio via ledit réseau téléphonique traditionnel (TDMN) ;
- et des moyens (MAV1, MAV2) propres à fournir automatiquement aux moyens de liaison (ML) les identifiants du premier et du second terminal de communication audio (T1, T2), lorsqu'une liaison multimédia (L2-L3) est à établir entre lesdits premier et second terminaux de communication vidéo (PC1, PC2) via le réseau asynchrone (IPN).

2. Dispositif selon la revendication 1, **caractérisé en ce que** lesdits moyens (MAV1, MAV2) propres à fournir automatiquement aux moyens de liaison (ML) les identifiants du premier et du second terminal de communication audio (T1, T2) comportent, dans chaque terminal de communication vidéo (PC1) :
- un moyen (MAV1) pour envoyer à l'autre terminal de communication vidéo (PC2), un identifiant du terminal téléphonique (T1) associé au terminal vidéo considéré (PC1) ;
- un moyen pour recevoir de l'autre terminal de communication vidéo (PC2), un identifiant du terminal téléphonique (T2) associé à cet autre terminal vidéo (PC2) ;
- et un moyen pour commander les moyens de liaison (ML) afin d'établir une liaison téléphonique (L1) entre les deux terminaux ainsi identifiés (T1, T2).

3. Dispositif selon la revendication 1, **caractérisé en ce que** lesdits moyens propres à fournir automatiquement aux moyens de liaison (ML) les identifiants du premier et du second terminal de communication audio (T1, T2) comportent, dans un noeud (B) du réseau téléphonique traditionnel, un moyen pour :
- chercher les identifiants du premier et du second terminal de communication audio (T1, T2) dans un annuaire centralisé;
- et commander les moyens de liaison (ML) afin d'établir une liaison téléphonique (L1) entre les deux terminaux (T1, T2) ainsi identifiés.

4. Dispositif selon la revendication 1, **caractérisé en ce que** lesdits moyens de gestion (MG, MG') sont agencés, en cas de réception d'une requête d'établissement de communication multimédia entre lesdits premier (PC1) et second (PC2) terminaux de communication vidéo, pour :
i) ordonner auxdits moyens de liaison (ML) d'établir une liaison téléphonique (L1) entre lesdits premier (T1) et second (T2) terminaux de communication audio,
ii) et appliquer a des données audio échangées via ladite liaison téléphonique (I1), un retard de transmission, de manière a compenser au moins partiellement une différence de durée de transmission entre lesdites données audio, via ladite liaison téléphonique (l1), et des données vidéo, échangées par lesdits premier (pc1) et second (pc2) terminaux de communication vidéo via une liaison multimedia (l2) établie au sein dudit réseau asynchrone (IPN).

5. Dispositif selon la revendication 4, **caractérisé en ce que** lesdits moyens de gestion (MG, MG') sont agencés pour appliquer aux données audio un retard de transmission de durée prédéterminée.

6. Dispositif selon la revendication 4, **caractérisé en ce que** lesdits moyens de gestion (MG, MG') sont agencés pour déterminer la durée du retard à appliquer aux données audio.

7. Dispositif selon la revendication 6, **caractérisé en ce que** lesdits moyens de gestion (MG, MG') sont agencés pour déterminer ladite durée en fonction de données auxiliaires.

8. Dispositif selon la revendication 7, **caractérisé en ce qu'**il comprend des moyens d'interface de gestion (IG) propres à délivrer lesdites données auxiliaires.

9. Dispositif selon la revendication 7, **caractérisé en ce que** lesdits moyens de liaison (ML) sont agencés pour établir des liaisons (L4-i), dites de signalisation, avec lesdits premier (PC1) et second (PC2) terminaux de communication vidéo, via ledit réseau asynchrone (IPN), de manière à recevoir lesdites données auxiliaires émises par lesdits premier et second terminaux de communication vidéo.

10. Dispositif selon la revendication 9, **caractérisé en ce que**, chaque terminal de communication vidéo (PCi) comprenant un microphone (MPi) propre à capter des signaux représentatifs des données audio délivrées par un utilisateur (Ui) du terminal de communication audio (Ti) avec lequel il constitue un couple, ledit dispositif comprend des modules auxiliaires (MAi), couplés chacun à un microphone (MPi) au sein desdits premier (PC1) et second (PC2) terminaux de communication vidéo, et agencés pour déterminer la différence de durée de transmission des données audio sur une liaison multimédia (L3) établie via le réseau asynchrone entre lesdits premier (PC1) et second (PC2) terminaux de communication vidéo, et sur ladite liaison téléphonique (L1), et générer des données auxiliaires représentatives de ladite différence.

11. Dispositif selon la revendication 10, **caractérisé en ce que** chaque module auxiliaire (MAi) comprend, d'une part, des moyens de traitement (PMi) agencés, à réception desdites données audio, pour :
i) en extraire une portion,
ii) constituer un paquet primaire avec les données audio de ladite portion,
iii) synchroniser ledit paquet primaire avec le flux vidéo échangé,
iv) et transmettre ledit paquet primaire au module auxiliaire (MAj) implanté dans le terminal de communication vidéo (PCj) avec lequel leur propre terminal de communication vidéo (PCi) a établi une liaison multimédia (L3) via ledit réseau asynchrone (IPN),
et d'autre part, des moyens de calcul (CMi) agencés, à réception d'un paquet primaire, pour :
v) dater ledit paquet primaire,
vi) comparer la portion de données audio contenues dans ledit paquet primaire daté aux données audio de téléphonie datées, précédemment reçues via ledit terminal de communication audio (Ti) et ledit microphone (MPi),
vii) en cas d'identité entre ladite portion et certaines desdites données audio de téléphonie, déterminer la différence de durée de transmission des données audio sur la liaison multimédia établie via le réseau asynchrone (IPN) entre lesdits premier (PC1) et second (PC2) terminaux de communication vidéo et sur ladite liaison téléphonique (L1),
viii) générer des données auxiliaires représentatives de ladite différence,
ix) et transmettre lesdites données auxiliaires audit module de liaison (ML) via une liaison de signalisation (L4-i).

12. Dispositif selon la revendication 11, **caractérisé en ce que** lesdits moyens de traitement (PMi) sont agencés, en cas de réception de données audio et avant la transmission dudit paquet primaire, pour constituer un paquet secondaire et le synchroniser avec le flux vidéo échangé, puis transmettre ledit paquet secondaire au module de calcul (CMj) implanté dans le terminal de communication vidéo (PCj) avec lequel leur propre terminal de communication vidéo (PCi) a établi une liaison multimédia (L3) via ledit réseau asynchrone (IPN), et **en ce que** lesdits moyens de calcul (CMi) sont agencés, à réception d'un paquet secondaire, pour ordonner la mémorisation et la datation des données audio de téléphonie provenant dudit terminal de communication audio (Tj) via ledit microphone (MPi).

13. Dispositif selon la revendication 9, **caractérisé en ce que**, chaque terminal de communication vidéo (PCi) comprenant un microphone (MPi) propre à capter des signaux représentatifs des données audio délivrées par un haut-parleur (HPTj) du terminal de communication audio (Tj) avec lequel il constitue un couple, lesdits moyens de gestion (MG') sont agencés, après établissement de ladite liaison téléphonique (L1), pour transmettre simultanément auxdits premier (PC1) et second (PC2) terminaux de communication vidéo, via la liaison téléphonique (L1), leurs haut-parleurs (HPPTi) et leurs microphones (MPi) respectifs, un message (MES) définissant un instant initial, et **en ce qu'**il comprend des modules auxiliaires (MAi'), couplés chacun à un microphone (MPi) au sein desdits premier (PC1) et second (PC2) terminaux de communication vidéo, et agencés pour déterminer la durée de transmission des données vidéo sur la liaison multimédia (L2) établie via le réseau asynchrone (IPN) entre lesdits premier (PC1) et second (PC2) terminaux de communication vidéo, et générer des données auxiliaires représentatives de ladite durée.

14. Dispositif selon la revendication 13, **caractérisé en ce que** chaque module auxiliaire (MAi') comprend i) des moyens de datation (DMi) agencés, d'une part, à réception dudit message (MES), pour déclencher un compteur temporel, et pour adjoindre un marquage temporel d'émission, représentatif de la durée écoulée depuis ledit déclenchement du compteur temporel, à chaque flux de paquets vidéo devant être transmis au terminal de communication vidéo (PCj) avec lequel leur propre terminal de communication vidéo (PCi) a établi une liaison multimédia (L2) via ledit réseau asynchrone (IPN), et d'autre part, à réception d'un flux de paquets vidéo marqué, pour adjoindre audit flux un marquage temporel de réception, représentatif de la durée écoulée depuis ledit déclenchement du compteur temporel, et ii) des moyens de calcul (CMi'), agencés pour déterminer à partir desdits marquages temporels d'émission et de réception la durée de transmission des données vidéo sur la liaison multimédia (L2) établie via le réseau asynchrone (IPN) entre lesdits premier (PC1) et second (PC2) terminaux de communication vidéo, puis pour générer des données auxiliaires représentatives de ladite durée de transmission, et transmettre lesdites données auxiliaires audit module de liaison (ML) via une liaison de signalisation (L4-i).

15. Dispositif selon la revendication 14, **caractérisé en ce que** lesdits moyens de gestion (MG') sont agencés pour déterminer une durée réelle de transmission des données vidéo sur la liaison multimédia (L2) établie via le réseau asynchrone (IPN) entre lesdits premier (PC1) et second (PC2) terminaux de communication vidéo par addition de la durée de transmission reçue et du résultat d'une soustraction entre une première durée de transmission du message entre lesdits moyens de gestion (MG) et le module auxiliaire (MA2') implanté dans le second terminal de communication vidéo (PC2) et une seconde durée de transmission du message entre lesdits moyens de gestion (MG') et le module auxiliaire (MA1') implanté dans le premier terminal de communication vidéo (PC1).

16. Dispositif selon la revendication 15, **caractérisé en ce que** lesdits moyens de gestion (MG') sont agencés pour déterminer lesdites première et seconde durées par une technique d'écho acoustique.

17. Terminal de communication vidéo (PC1) apte à être connecté à un réseau asynchrone (IPN) et à un réseau téléphonique traditionnel (TDMN), **caractérisé en ce qu'**il comprend un module (MAV1) pour :
- envoyer à un autre terminal de communication vidéo (PC2), un identifiant d'un terminal de communication audio (T1) associé au terminal vidéo considéré (PC1);
- recevoir de l'autre terminal de communication vidéo (PC2), un identifiant d'un terminal de communication audio (T2) associé à cet autre terminal vidéo (PC2) ;
- et commander des moyens de liaison (ML) du réseau téléphonique traditionnel (TDMN) afin d'établir une liaison téléphonique (L1) entre ce premier et ce second terminaux de communication audio (T1, T2), dans ce réseau téléphonique traditionnel (TDMN), lorsqu'une liaison multimédia (L2-L3) est à établir entre ce terminal de communication vidéo (PC1) et un autre terminal de communication vidéo (PC2) via un réseau asynchrone (IPN).

## Claims

1. A device for managing multimedia calls both via an asynchronous network (IPN) and via a traditional telephone network (TDMN) between firstly a first audio communications terminal (T1) associated with a first video communications terminal (PC1), and secondly a second audio communications terminal (T2) associated with a second video communications terminal (PC2); these video communications terminals being suitable for requesting a multimedia call (L2-L3) capable of transmitting at least one video signal to be set up over the asynchronous network;
the device being **characterized in that** it comprises:
· link means (ML) suitable for being ordered to set up a telephone link (L1) between said first and second audio communications terminals (T1, T2) via said traditional telephone network (TDMN); and
· means (MAV1, MAV2) suitable for automatically supplying the link means (ML) with the identifiers of the first and second audio communications terminals (T1, T2) when a multimedia link (L2-L3) is to be set up between the first and second video communications terminals (PC1, PC2) via the asynchronous network (IPN).

2. A device according to claim 1, **characterized in that** said means (MAV1, MAV2) suitable for automatically supplying the identifiers of the first and second audio communications terminals (T1, T2) to the link means (ML) comprise, in each video communications terminal (PC1):
· means (MAV1) for sending to the other video communications terminal (PC2) an identifier of the telephone terminal (T1) associated with the video terminal in question (PC1);
· means for receiving from the other video communications terminal (PC2) an identifier of the telephone terminal (T2) associated with said other video terminal (PC2); and
· means for instructing the link means (ML) to set up a telephone link (L1) between the two terminals (T1, T2) as identified in this way.

3. A device according to claim 1, **characterized in that** said means suitable for automatically supplying the link means (ML) with the identifiers of the first and second audio communications terminals (T1, T2) comprise, in a node (B) of the traditional telephone network:
· means for searching for the identifiers of the first and second audio communications terminals (T1, T2) in a centralized directory; and
· means for instructing the link means (ML) to set up a telephone link (L1) between the two terminals (T1, T2) as identified in this way.

4. A device according to claim 1, **characterized in that** said management means (MG, MG') are arranged, on receiving a request to set up a multimedia call between said first and second video communications terminals (PC1, PC2):
i) to order said link means (ML) to set up a telephone link (L1) between said first and second audio communications terminals (T1, T2); and
ii) to apply to said audio data exchanged via said telephone link (L1) a transmission delay so as to compensate at least in part for a difference in transmission duration between said audio data via said telephone link (L1), and the video data exchanged between said first and second video communications terminal (PC1, PC2) via a multimedia link (L2) set up within said asynchronous network (IPN).

5. A device according to claim 4, **characterized in that** said management means (MG, MG') are arranged to apply to the audio data a transmission delay of predetermined duration.

6. A device according to claim 4, **characterized in that** said management means (MG, MG') are arranged to determine the duration of the delay to be applied to the audio data.

7. A device according to claim 6, **characterized in that** said management means (MG, MG') are arranged to determine said duration as a function of auxiliary data.

8. A device according to claim 7, **characterized in that** it includes management interface means (IG) suitable for delivering said auxiliary data.

9. A device according to claim 7, **characterized in that** said link means (ML) are arranged to establish so-called signaling links (L4-i) with said first and second video communications terminals (PC1, PC2) via said asynchronous network (IPN) in such a manner as to receive said auxiliary data sent by said first and second video communications terminal.

10. A device according to claim 9, **characterized in that** each video communications terminal (PCi) includes a microphone (MPi) suitable for picking up signals representative of audio data delivered by a user (Ui) of the audio communications terminal (Ti) with which it is paired, and said device includes auxiliary modules (MAi) each coupled to a microphone (MPi) within each of said first and second video communications terminals (PC1, PC2) and arranged to determine the difference in transmission duration of audio data over a multimedia link (L3) set up via the asynchronous network between said first and second video communications terminals (PC1, PC2) and over said telephone link (L1), and to generate auxiliary data representative of said difference.

11. A device according to claim 10, **characterized in that** each auxiliary module (MAi) comprises firstly processor means (PMi) arranged, on receiving said audio data:
i) to extract a portion therefrom;
ii) to constitute a primary packet with the audio data of said portion;
iii) to synchronize said primary packet with the exchanged video stream; and
iv) to transmit said primary packet to the auxiliary module (MAj) implanted in the video communications terminal (PCj) with which their own video communications terminal (PCi) has set up a multimedia link (L3) via said asynchronous network (IPN);
and secondly calculation means (CMi) arranged, on receiving a primary packet:
v) to apply a date and time stamp to said primary A device according to;
vi) to compare the audio data portion contained in said stamped primary packet to the stamped telephone audio data previously received via said audio communications terminal (Ti) and said microphone (MPi);
vii) when said portion is identical to some of said telephone audio data, to determine the difference in audio data transmission duration over the multimedia link set up via the asynchronous network (IPN) between said first and second video communications terminals (PC1, PC2) and over said telephone link (L1);
viii) to generate auxiliary data representative of said difference; and
ix) to transmit said auxiliary data to said link module (ML) via a signaling link (L4-i).

12. A device according to claim 11, **characterized in that** said processor means (PMi) are arranged, on receiving audio data and before transmitting said primary packet, to make up a secondary packet and to synchronize it with the exchanged audio stream, then to transmit said secondary packet to the calculation module (CMj) implanted in the video communications terminal (PCj) with which their own video communications terminal (PCi) has set up a multimedia link (L3) via said asynchronous network (IPN), and **in that** said calculation means (CMi) are arranged, on receiving a secondary packet, to order storage and date and time stamping of the telephone audio data coming from said audio communications terminal (Tj) via said microphone (MPi).

13. A device according to claim 9, **characterized in that** each video communications terminal (PCi) includes a microphone (MPi) suitable for picking up signals representative of audio data delivered by a loudspeaker (HPTj) of the audio communications terminal (Tj) with which it constitutes a pair, and said management means (MG') are arranged, after said telephone link (L1) has been set up, to transmit simultaneously to said first and second video communications terminals (PC1, PC2) via the telephone link (L1) their respective loudspeakers (HPTi) and microphones (MPi), a message (MES) defining an initial instant, and **in that** it includes auxiliary modules (MAi') each coupled to a microphone (MPi) within said first and second video communications terminals (PC1, PC2) and arranged to determine the transmission duration of video data over the multimedia link (L2) set up via the asynchronous network (IPN) between said first and second video communications terminals (PC1, PC2), and to generate auxiliary data representative of said duration.

14. A device according to claim 13, **characterized in that** each auxiliary module (MAi') comprises: i) date and time stamping means (DMi) arranged firstly, on receiving said message (MES), to trigger a time counter, and to add a send time mark representative of the duration that has elapsed since said triggering of time counting to each video packet stream that is to be transmitted to the video communications terminal (PCj) with which their own video communications terminal (PCi) has set up a multimedia link (L2) via said asynchronous network (IPN), and secondly, on receiving a marked video packet stream, to add to said stream a receive time mark representative of the duration that has elapsed since said triggering of the time counter; and ii) calculation means (CMi') arranged to respond to said send and receive time marks to determine the transmission duration of video data over the multimedia link (L2) set up via the asynchronous network (IPN) between said first and second video communications terminals (PC1, PC2), and then to generate auxiliary data representative of said transmission duration, and to transmit said auxiliary data to said link module (ML) via a signaling link (L4-i).

15. A device according to claim 14, **characterized in that** said management means (MG') are arranged to determine a real transmission duration of video data over the multimedia link (L2) set up via the asynchronous network (IPN) between said first and second video communications terminals (PC1, PC2) by adding the received transmission duration to the result of taking the difference between a first message transmission duration between said management means (MG) and the auxiliary module (MA2') implanted in the second video communications terminal (PC2) and a second message transmission duration between said management means (MG') and the auxiliary module (MA1') implanted in the first video communications terminal (PC1).

16. A device according to claim 15, **characterized in that** said management means (MG') are arranged to determine said first and second durations by an acoustic echo technique.

17. A video communications terminal (PC1) suitable for being connected to an asynchronous network (IPN) and to a traditional telephone network (TDMN), the terminal being **characterized in that** it includes a module (MAV1) for:
· sending to another video communications terminal (PC2) an identifier of an audio communications terminal (T1) associated with the video terminal in question (PC1);
· receiving from the other video communications terminal (PC2) an identifier of an audio communications terminal (T2) associated with said other video terminal (PC2); and
· instructing link means (ML) of the traditional telephone network (TDMN) to set up a telephone link (L1) between said first and second audio communications terminals (T1, T2) via the traditional telephone network (TDMN) when a multimedia link (L2-L3) is to be set up between said video communications terminal (PC1) and another video communications terminal (PC2) via an asynchronous network (IPN).

## Patentansprüche

1. Vorrichtung zur Verwaltung von Multimediakommunikationen über ein asynchrones Netzwerk (IPN) und ein herkömmliches Telefonnetz (TDMN) zwischen zum einen einem ersten Audio-Kommunikationsendgerät (T1), das mit einem ersten Video-Kommunikationsendgerät (PC1) verknüpft ist, und zum anderen einem zweiten Audio-Kommunikationsendgerät (T2), das mit einem zweiten Video-Kommunikationsendgerät (PC2) verknüpft ist; diese Video-Kommunikationsendgeräte sind geeignet den Aufbau einer Multimediakommunikation (L2-L3) durch das asynchrone Netzwerk anzufordern, die im Stande ist, mindestens ein Videosignal zu übertragen; **dadurch gekennzeichnet, dass** sie folgendes enthält:
- Verbindungsmittel (ML), die geeignet sind, auf Befehl eine Telefonverbindung (L1) zwischen diesem ersten (T1) und diesem zweiten (T2) Audio-Kommunikationsendgerät über dieses herkömmliche Telefonnetz (TDMN) aufzubauen;
- und Mittel (MAV1, MAV2), die geeignet sind, den Verbindungsmitteln (ML) automatisch die Kennungen des ersten und des zweiten Audio-Kommunikationsendgeräts (T1, T2) zu liefern, wenn eine Multimediaverbindung (L2-L3) zwischen diesem ersten und diesem zweiten Video-Kommunikationsendgerät (PC1, PC2) über das asynchrone Netzwerk (IPN) aufgebaut werden soll.

2. Vorrichtung gemäß Anspruch 1, **dadurch gekennzeichnet, dass** diese Mittel (MAV1, MAV2), die geeignet sind, die Kennungen des ersten und des zweiten Audio-Kommunikationsendgeräts (T1, T2) automatisch an die Verbindungsmittel (ML) zu liefern, in jedem Video-Kommunikationsendgerät (PC1) folgendes enthalten:
- ein Mittel (MAV1), um an das andere Video-Kommunikationsendgerät (PC2) eine Kennung des Telefonendgeräts (T1), das mit dem betrachteten Videoendgerät (PC1) verknüpft ist, zu schicken;
- ein Mittel, um vom anderen Video-Kommunikationsendgerät (PC2) eine Kennung des Telefonendgeräts (T2), das mit diesem anderen Video-Endgerät (PC2) verknüpft ist, zu empfangen;
- und ein Mittel, um die Verbindungsmittel (ML) zu steuern, um eine telefonische Verbindung (L1) zwischen den beiden so identifizierten Endgeräten (T1, T2) aufzubauen.

3. Vorrichtung gemäß Anspruch 1, **dadurch gekennzeichnet, dass** diese Mittel, die geeignet sind, die Kennungen des ersten und des zweiten Audio-Kommunikationsendgeräts (T1, T2) automatisch an die Verbindungsmittel (ML) zu liefern, in einem Knotenpunkt (B) des herkömmlichen Telefonnetzes ein Mittel enthalten:
- zum Suchen der Kennungen des ersten und des zweiten Audio-Kommunikationsendgeräts (T1, T2) in einem zentralen Telefonbuch;
- und zum Steuern der Verbindungsmittel (ML) zum Aufbau einer Telefonverbindung (L1) zwischen den beiden so identifizierten Endgeräten (T1, T2).

4. Vorrichtung gemäß Anspruch 1, **dadurch gekennzeichnet, dass** diese Mittel zum Verwalten (MG, MG') so aufgebaut sind, dass sie beim Empfangen einer Anforderung betreffend das Aufbauen einer Multimediakommunikation zwischen diesem ersten (PC1) und diesem zweiten (PC2) Video-Kommunikationsendgerät:
i) diesen Verbindungsmitteln (ML) befehlen, eine Telefonverbindung (L1) zwischen diesem ersten (T1) und diesem zweiten (T2) Audio-Kommunikationsendgerät aufzubauen,
ii) und auf diese Audiodaten, die via diese Telefonverbindung (l1) ausgetauscht werden, eine Übertragungsverzögerung anwenden, so dass zumindest teilweise ein Unterschied kompensiert wird betreffend die Übertragungsdauer zwischen diesen Audiodaten über diese Telefonverbindung (l1)und Videodaten, die durch dieses erste (pc1) und dieses zweite (pc2) Video-Kommunikationsendgerät via eine Multimediaverbindung (l2), die in diesem asynchronen Netzwerk (IPN) aufgebaut ist, ausgetauscht werden.

5. Vorrichtung gemäß Anspruch 4, **dadurch gekennzeichnet, dass** diese Mittel zum Verwalten (MG, MG') so aufgebaut sind, dass sie auf die Audiodaten eine Übertragungsverzögerung von festgelegter Dauer anwenden.

6. Vorrichtung gemäß Anspruch 4, **dadurch gekennzeichnet, dass** diese Mittel zum Verwalten (MG, MG') so aufgebaut sind, dass sie die Dauer der auf die Audiodaten anzuwendenden Verzögerung bestimmen.

7. Vorrichtung gemäß Anspruch 6, **dadurch gekennzeichnet, dass** diese Mittel zum Verwalten (MG, MG') so aufgebaut sind, dass sie diese Dauer in Abhängigkeit von Hilfsdaten bestimmen.

8. Vorrichtung gemäß Anspruch 7, **dadurch gekennzeichnet, dass** sie Verwaltungsschnittstellenmittel (IG) einschließt, die geeignet sind, diese Hilfsdaten zu liefern.

9. Vorrichtung gemäß Anspruch 7, **dadurch gekennzeichnet, dass** diese Verbindungsmittel (ML) so aufgebaut sind, dass sie so genannte Signalisierungsverbindungen (L4-i) mit diesem ersten (PC1) und diesem zweiten (PC2) Video-Kommunikationsendgerät via dieses asynchrone Netzwerk (IPN) aufbauen, so dass sie diese Hilfsdaten empfangen, die von diesem ersten und diesem zweiten Video-Kommunikationsendgerät gesendet werden.

10. Vorrichtung gemäß Anspruch 9, **dadurch gekennzeichnet, dass** jedes Video-Kommunikationsendgerät (PCi) ein Mikrofon (MPi) enthält, das geeignet ist, Signale einzufangen, die für Audiodaten stehen, die von einem Nutzer (Ui) des Audio-Kommunikationsendgeräts (Ti) geliefert werden, mit dem es ein Paar bildet, dass diese Vorrichtung Hilfsmodule (MAi) enthält, die jeweils an ein Mikrofon (MPi) in diesem ersten (PC1) und diesem zweiten (PC2) Video-Kommunikationsendgerät gekoppelt sind, und so aufgebaut sind, dass sie den Unterschied bestimmen hinsichtlich der Übertragungsdauer der Audiodaten auf einer Multimediaverbindung (L3), die via das asynchrone Netzwerk zwischen diesem ersten (PC1) und diesem zweiten (PC2) Video-Kommunikationsendgerät aufgebaut ist, und auf dieser Telefonverbindung (L1), und Hilfsdaten generieren, die für diesen Unterschied stehen.

11. Vorrichtung gemäß Anspruch 10, **dadurch gekennzeichnet, dass** jedes Hilfsmodul (MAi) zum einen Mittel zum Verarbeiten (PMi) enthält, die so aufgebaut sind, dass sie beim Empfangen dieser Audiodaten:
i) einen Teil davon herausziehen,
ii) ein primäres Paket mit den Audiodaten dieses Teils bilden,
iii) dieses primäre Paket mit dem ausgetauschten Videostrom synchronisieren,
iv) und dieses primäre Paket zum Hilfsmodul (MAj) übertragen, das im Video-Kommunikationsendgerät (PCj) angesiedelt ist, mit dem ihr eigenes Video-Kommunikationsendgerät (PCi) über dieses asynchrone Netzwerk (IPN) eine Multimediaverbindung (L3) aufgebaut hat,
und zum anderen Mittel zum Rechnen (CMi), die so aufgebaut sind, dass sie beim Empfangen eines primären Pakets:
v) dieses primäre Paket datieren,
vi) den in diesem datierten primären Paket enthaltenen Teil Audiodaten mit den datierten Telefonieaudiodaten vergleichen, sie zuvor über dieses Audio-Kommunikationsendgerät (Ti) und dieses Mikrofon (MPi) empfangen wurden,
vii) im Falle der Identität zwischen diesem Teil und einigen dieser Telefonieaudiodaten den Unterschied bestimmen hinsichtlich der Übertragungsdauer der Audiodaten auf der Multimediaverbindung, die via das asynchrone Netzwerk (IPN) zwischen diesem ersten (PC1) und diesem zweiten (PC2) Video-Kommunikationsendgerät aufgebaut wurde und auf dieser Telefonverbindung (L1),
viii) Hilfsdaten generieren, die für diesen Unterschied stehen,
ix) und diese Hilfsdaten über eine Signalisierungsverbindung (L4-i) zu diesem Verbindungsmodul (ML) übertragen.

12. Vorrichtung gemäß Anspruch 11, **dadurch gekennzeichnet, dass** diese Mittel zur Verarbeitung (PMi) so aufgebaut sind, dass beim Empfangen von Audiodaten und vor Übertragung dieses primären Pakets ein sekundäres Paket gebildet wird und dieses mit dem ausgetauschten Videostrom synchronisiert wird, dann dieses sekundäre Paket zum Rechenmodul (CMj) übertragen wird, das im Video-Endgerät (PCj) angesiedelt ist, mit dem ihr eigenes Video-Endgerät (PCi) eine Multimediaverbindung (L3) via dieses asynchrone Netzwerk (IPN) aufgebaut hat, und **dadurch gekennzeichnet, dass** diese Mittel zum Rechnen (CMi) so aufgebaut sind, dass sie beim Empfangen eines sekundären Pakets die Speicherung und Datierung der Telefonieaudiodaten, die über dieses Mikrofon (MPi) vom Audio-Endgerät (Tj) herkommen, anordnen.

13. Vorrichtung gemäß Anspruch 9, **dadurch gekennzeichnet, dass** jedes Video-Kommunikationsendgerät (PCi) ein Mikrofon (MPi) enthält, das geeignet ist, Signale einzufangen, die für Audiodaten stehen, die von einem Lautsprecher (HPTj) des Audio-Kommunikationsendgeräts (Ti) geliefert werden, mit dem es ein Paar bildet, dass diese Mittel zum Verwalten (MG') so aufgebaut sind, dass sie nach dem Aufbau dieser Telefonverbindung (L1) über die Telefonverbindung (L1), ihre Lautsprecher (HPPTi) und ihre jeweiligen Mikrofone (MPi) eine Nachricht (MES), die einen Anfangszeitpunkt definiert, gleichzeitig an dieses erste (PC1) und dieses zweite (PC2) Video-Kommunikationsendgerät übertragen, und **dadurch gekennzeichnet, dass** sie Hilfsmodule (MAi) enthält, die jeweils an ein Mikrofon (MPi) in diesem ersten (PC1) und diesem zweiten (PC2) Video-Kommunikationsendgerät gekoppelt sind, und so aufgebaut sind, dass sie die Übertragungsdauer der Videodaten auf der Multimediaverbindung (L2), die via das asynchrone Netzwerk (IPN) zwischen diesem ersten (PC1) und diesem zweiten (PC2) Video-Kommunikationsendgerät aufgebaut ist, bestimmen, und Hilfsdaten generieren, die für diese Dauer stehen.

14. Vorrichtung gemäß Anspruch 13, **dadurch gekennzeichnet, dass** jedes Hilfsmodul (MAi') folgendes enthält: i) Datierungsmittel (DMi), die so aufgebaut sind, dass sie zum einen beim Empfangen dieser Nachricht (MES) einen Zeitzähler auslösen und jedem Videopaketstrom, der an das Video-Kommunikationsendgerät (PCj) übertragen werden soll, mit dem ihr eigenes Video-Kommunikationsendgerät (PCi) eine Multimediaverbindung (L2) über dieses asynchrone Netzwerk (IPN) aufgebaut hat, eine Zeitmarkierung für das Senden hinzufügen, die für die Zeit steht, die seit der Auslösung des Zeitzählers verstrichen ist, und zum anderen beim Empfangen eines markierten Videopaketstroms zu diesem Strom eine Zeitmarkierung für den Empfang hinzufügen, die für die Zeit steht, die seit dieser Auslösung des Zeitzählers verstrichen ist, und ii) Mittel zum Rechnen (CMi'), die so aufgebaut sind, dass sie ausgehend von diesen Zeitmarkierungen für Senden und Empfangen die Übertragungsdauer der Videodaten auf der Multimediaverbindung (L2), die über das asynchrone Netzwerk (IPN) zwischen diesem ersten (PC1) und diesem zweiten (PC2)Video-Kommunikationsendgerät aufgebaut wurde, ermitteln, dann Hilfsdaten generieren, die für diese Übertragungsdauer stehen, und diese Hilfsdaten über eine Signalisierungsverbindung (L4-i) zu diesem Verbindungsmodul (ML) übertragen.

15. Vorrichtung gemäß Anspruch 14, **dadurch gekennzeichnet, dass** diese Mittel zum Verwalten (MG') so aufgebaut sind, dass sie eine tatsächliche Übertragungsdauer der Videodaten auf der Multimediaverbindung (L2), die via das asynchrone Netzwerk (IPN) zwischen diesem ersten (PC1) und diesem zweiten (PC2) Video-Kommunikationsendgerät aufgebaut ist, durch Addition der empfangenen Übertragungsdauer und des Ergebnisses einer Subtraktion zwischen einer ersten Übertragungsdauer der Nachricht zwischen diesen Mitteln zum Verwalten (MG) und dem Hilfsmodul (MA2'), das im zweiten Video-Kommunikationsendgerät (PC2) angesiedelt ist, und einer zweiten Übertragungsdauer der Nachricht zwischen den Mitteln zum Verwalten (MG') und dem Hilfsmodul (MA1'), das im ersten Video-Kommunikationsendgerät (PC1) angesiedelt ist, ermitteln.

16. Vorrichtung gemäß Anspruch 15, **dadurch gekennzeichnet, dass** diese Mittel zum Verwalten (MG') so aufgebaut sind, dass sie diese erste und diese zweite Dauer durch eine Akustikechotechnik bestimmen.

17. Video-Kommunikationsendgerät (PC1), das für den Anschluss an ein asynchrones Netzwerk (IPN) und an ein herkömmliches Telefonnetz (TDMN) geeignet ist, **dadurch gekennzeichnet, dass** es ein Modul (MAV1) enthält:
- um einem anderen Video-Kommunikationsendgerät (PC2) eine Kennung eines Audio-Kommunikationsendgeräts (T1), das mit dem betrachteten Video-Endgerät verknüpft ist, zu schicken;
- um von dem anderen Video-Kommunikationsendgerät (PC2) eine Kennung eines Audio-Kommunikationsendgeräts (T2), das mit diesem anderen Video-Endgerät (PC2) verknüpft ist, zu empfangen;
- und um Verbindungsmittel (ML) des herkömmlichen Telefonnetzes (TDMN) zu steuern, um eine Telefonverbindung (L1) zwischen diesem ersten und diesem zweiten Audio-Kommunikationsendgerät (T1, T2) in diesem herkömmlichen Telefonnetz (TDMN) aufzubauen, wenn eine Multimediaverbindung (L2-L3) zwischen diesem Video-Kommunikationsendgerät (PC1) und einem anderen Video-Kommunikationsendgerät (PC2) via ein asynchrones Netzwerk (IPN) aufgebaut werden soll.
